# EUROPÄISCHE PATENTANMELDUNG

(11) **EP 3 081 806 A1**
(43) Veröffentlichungstag der Anmeldung: **19.10.2016**
(21) Anmeldenummer: 15001107.0
(22) Anmeldetag: 16.04.2015
(51) Int. Cl.: F03B 13/18, F16H 19/04

(54) **VORRICHTUNG ZUR UMWANDLUNG VON WELLENENERGIE IN ELEKTROENERGIE**

(71) Anmelder: HAB Hallen- und Anlagenbau GmbH, 17509 Wusterhusen (DE)
(72) Erfinder: Ehrke, Manfred, D-17398 Anklam (DE); Wulff, Andreas, 17454 Zinnowitz (DE)

(57) **Zusammenfassung**

Die Erfindung betrifft eine Vorrichtung zur Umwandlung der Energie von Meereswellen in elektrische Energie, wobei die Wellenenergie zuerst in eine mechanische und aus der mechanischen Energie in eine elektrische Energie umgewandelt wird. Die Vorrichtung besteht aus einer Kombination eines auf der Wasseroberfläche angeordneten Schwimmkörpers (1) mit einem Zahnstangen-Zahnradgetriebe (2), einem Auftriebs- und Stabilisierungskörper (3) und einer im Meeresgrund angeordneten Gründung (3). Der Schwimmkörper (1) ist über eine Zugkette (4) an einen als Zahnstange ausgebildeten Triebstock (5) befestigt, der Triebstock (5) greift in ein mit einem Generator (7) verbundenes Zahnstangen-Zahnradgetriebe (2) ein, das Zahnstangen- Zahnradgetriebe (2) ist mit einem Auftriebs- und Stabilisierungskörper (6) verbunden und der Auftriebs- und Stabilisierungskörper (6) ist mittels Führungsschienen (8) und über einen Puffer (9) federnd an einer Gründung (3) befestigt ist.

## Beschreibung

Die Erfindung betrifft eine Vorrichtung zur Umwandlung der Energie von Meereswellen in elektrische Energie, wobei die Wellenenergie zuerst in eine mechanische umgewandelt und aus der mechanischen Energie in eine elektrische Energie erzeugt wird.

Die Erfindung gemäß DE 10 2009 022 068 A1 betrifft eine Anordnung zur mittelbaren Umwandlung von Meereswellenenergie in elektrische Energie oder mechanische Arbeit. Die Anordnung besteht aus einem mit einem Schwimmkörper in Verbindung stehenden, an einem Gestell gelenkig angeschlagenen Hebelarm, einem geführtes Zahnstangenpaar, welches mit mindestens einem, am Gestell gelagerten Ritzel in Verbindung steht, sowie einer Arbeitsmaschine oder einen Generator, der direkt oder über ein Getriebe vom Ritzel angetrieben wird, wobei weiterhin das Zahnstangenpaar kraftseitig mit dem Hebelarm in Koppelverbindung steht. Zur kraftseitigen Kopplung ist zwischen dem Zahnstangenpaar und dem Hebelarm eine Koppelstange vorgesehen, welche einerseits am Hebelarm verschwenkbeweglich sowie andererseits ebenfalls verschwenkbeweglich an einem Verbindungsträger fixiert ist. Der Verbindungsträger nimmt die zum Hebelarm gerichteten Enden der Zahnstangen des Zahnstangenpaars auf.
Die DE 20 2009 002 963 U1 beschreibt einen Unterwasser-Dynamo, der aus einem Schwimmer, einer Schubstange, einem Getriebeblock und einem am Getriebeblock befestigten Dynamo zur Umwandlung der Drehkraft in Elektrizität besteht. Die Schubstange ist als Zahnstange ausgebildet und überträgt die Kräfte des Schwimmers in den Getriebeblock. Im Getriebeblock wird die Auf- und Abbewegung des Schwimmers in eine Drehbewegung umgewandelt. Die von der Schubstange bewegten Zahnräder drehen je eine Achse. Auf den Achsen ist jeweils ein Freilauf montiert, auf dem jeweils ein weiteres Zahnrad montiert ist. Bei Drehung der Achsen sperrt ein Freilauf und überträgt die Drehkräfte auf das aufmontierte Zahnrad. Der andere Freilauf ist entkoppelt und überträgt keine Kräfte. Beim Richtungswechsel der Zahnstange wird die Wirkung der Hülsen gewechselt. Hierdurch wird erreicht, dass das Getriebezahnrad immer in die gleiche Richtung gedreht wird. Durch Aneinderfügen von Freiläufen, Zahnräder und Achsen wird eine Schwungscheibe angetrieben, wobei die Schwungscheibe mittels Kugellager und Freilauf auf der Achse befestigt ist. Hier wird ein Zahnstangen- Zahnradgetriebe zur Umwandlung von Linearbewegungen in Rotationsbewegungen für den Antrieb eines Dynamos beschrieben, aber keine komplette Vorrichtung zur Umwandlung von Meereswellen in elektrische Energie.
In der DE 10 2005 016 701 A1 wird eine Vorrichtungen zur Erzeugung von Elektroenergie unter Nutzung der Wellenenergie offenbart, wobei in einem durch alternierende Wasserauftriebskräfte in vertikaler Vorzugsrichtung bewegten Schwimmkörper ein Antriebsaggregat - arbeitend auf einen Elektrogenerator - angeordnet ist. Die Antriebswelle des Antriebsaggregates ist zur Erzeugung eines Drehmoments mit einem sich in der vertikalen Bewegungsrichtung unterhalb des Schwimmkörpers erstreckenden Strömungswiderstand mittels, als Hubmast ausgeführter, flexibler oder biegesteifer Anbindung gekoppelt, so dass die jeweils bei der Aufwärts-/Auftriebsbewegung erzeugte Kraftwirkung zwischen Schwimmkörper und Strömungswiderstand über die transversal durch den Schwimmkörper verschiebbare flexible oder biegesteife Anbindung in das Antriebsaggregat im Inneren des Schwimmkörpers eine dem Antriebsaggregat zuzuführende Zugkraft einleitet wird. Der über Führungsrollen vertikal durch den Schwimmkörper verschiebbare Hubmast ist mittels Zahnräder oder einer anderen Kupplung mit dem Antriebsaggregat in der Auftriebsphase gekoppelt, wobei aus der translatorischen Bewegung des Hubmastes eine Drehbewegung des Generators entsteht. Nach abgeschlossener Aufwärts- bzw. Auftriebsbewegung wird der Hubmast innerhalb des Schwimmkörpers mit reduzierter Kraftwirkung bei geringstem Strömungswiderstand ohne Eingriff der Kupplung zurück zur Ausgangsposition gebracht.
Durch die Anordnung der Vorrichtung zur Umwandlung der translatorischen Bewegung in eine Rotationsbewegung (Getriebe) und des Generators innerhalb eines Schwimmkörpers, der durch die Wellen in eine auf- und abwärts gerichtete Bewegung zur Erzeugung versetzt wird, sind der Generator sowie das Getriebe zusätzlichen Belastungen ausgesetzt. Dadurch kann es in beiden Einheiten zu Störungen kommen, die erst mit erheblichem Aufwand zu beheben sind. Außerdem wird durch die Anordnung des Generators und des Getriebes innerhalb des Schwimmkörpers der Schwimmkörper sehr schwer und träge und kann die Energie aus der Bewegung der Wellen nur unzureichend in eine Rotationsbewegung zum Antrieb des Generators umwandeln.

Die GB 24 08 075 A beschreibt eine Vorrichtung zur Gewinnung von Energie aus Wellen, bei der ein Schwimmkörper an eine Antriebswelle gekoppelt ist, so dass eine vertikale Bewegung der Schwimmervorrichtungen die Antriebswelle antreibt.
Der Schwimmkörper ist dabei über ein Seil mit einer auf der Antriebswelle montierte Riemenscheibe verbunden. Die Antriebswelle ist über eine Kupplungs-/Freilaufeinrichtung und einem Getriebe mit einen Generator gekoppelt, wobei auf der Antriebswelle ein Schwungrad montiert ist. Das Seil überträgt die Bewegung des Schwimmkörpers auf die Riemenscheibe und wandelt die lineare Bewegung der Wellen in eine Rotationsbewegung um.
Die Erfindung gemäß der WO 2012 152 289 A2 betrifft eine Welle, die einen Generator antreibt, der als ein Stromgenerator ausgebildet ist, wobei die Energie der Wellenbewegung des Meeres ausgenutzt wird. Das Funktionsprinzip des Wellenenergiewandlers beruht auf einer riesigen Rolle mit monodirektionaler Drehung. Um die Bewegung der Wellen zu erfassen, ist eine Zahnstange (Zahnstange auf beiden Seiten) an einer Boje, die sich nach oben und unten bewegt, befestigt. Diese treibt ein Getriebe zur Umwandlung der hin- und hergehenden Bewegung der Boje in eine monodirektionale kontinuierliche Drehbewegung. Das Getriebe treibt die riesige Rolle und den mit der Rolle verbundenen Generator zur Erzeugung elektrischer Energie an. Im Getriebe wird eine Ratsche eingesetzt, um die hin- und hergehende Bewegung in eine Rotationsbewegung mit nur einer Drehrichtung zu erzeugen.
Die US 2010 201 130 A1 beschreibt eine Vorrichtung zur Umwandlung von Wellenenergie in elektrische oder mechanische Energie. Dabei treibt die Meereswelle einen schwebenden Kolben mit einer am Kolben angeordneten Schubstange in einem geschlossenen Zylinder an. Die Linearbewegung der Schubstange wird mittels eines Kettenriemens in eine Drehbewegung eines umwandelt
In der US 42 66 143 A wird eine Energieumwandlungsvorrichtung offenbart, die die natürlichen Bewegungen der Meereswellen nutzt, um elektrische Energie zu erzeugen. Die Vorrichtung besteht aus einem Tank, der in der Nähe der Oberfläche des Wassers schwimmt und von einer Seite zur anderen Seite um einen Drehpunkt kippen kann, wobei unter dem Tank ein Gewicht angeordnet ist um dadurch eine pendelartige Bewegung zu enthalten.

Die Pendelbewegung des Tanks wird verwendet, um eine Vielzahl von Schwerkrafträdern oder ihre jeweiligen horizontalen Plattformen in dem Tank derart in Bewegung zu versetzen, dass Drehwellen, die mit den Schwerkrafträdern verbunden sind, zum Drehen gebracht werden. Elektrische Generatoren sind mit den Drehwellen zum Erzeugen elektrischer Energie aus der mechanischen Rotationsenergie der Drehwellen verbunden. Jedes Schwerkraftrad ist mit einer ratschenartigen Verriegelung ausgerüstet, die die Rückwärtsbewegung des Rades verhindert, so dass es nur in einer einzigen Richtung in einem kreisförmigen Weg auf der Plattform rollt. Während ein oder mehrere Schwerkrafträder ihre Sperren gesetzt haben, so dass die Räder nur im Uhrzeigersinn rollen, sind bei anderen Schwerkrafträdern die Sperren frei und können gegen den Uhrzeigersinn rollen. Auf diese Weise rollen die Schwerkrafträder beim Kippen des Tanks zur Seite beim Anstieg einer Ozeanwelle von der höheren Seite der jeweiligen Plattformen auf die unteren Seiten entlang ihrer vorgeschriebenen Kreisbahnen.
In der GB 203 34 88 A wird ein durch Wellen angetrieben Generator beschrieben, bei dem ein Schwimmer durch ein Kabel mit einer eingetauchten
Energieumwandlungsvorrichtung, wie eine Kolben- und Zylindervorrichtung, verbunden ist. Der Auftrieb eines Schwimmerelements verschiebt einen Kolben in einem Zylinder und pumpt mittels eines Peltonrades ein Fluid in eine Lufttasche, wobei die Tasche auch einen elektrischen Generator enthält. Wenn sich das Schwimmelement nach unten bewegt, so folgt der Kolben ebenfalls nach unten und eine Einwegventilanordnung ermöglicht, dass das Fluid in den Zylinder fließt. Während des Aufwärts- Pumphubes des Kolbens wird die Flüssigkeit aus dem Zylinder herausgepumpt und treibt das Peltonrad an. Der Schwimmer kann nach unten hin durch eine elastische Verbindung, die an der Unterseite des Schwimmers angebracht ist, vorgespannt werden.
In einer eigenen Patentanmeldung 10 2014 015 800.4 wird Vorrichtung zur Umwandlung einer linearen Bewegung in eine Rotationsbewegung mit einem Zahnstangen- Zahnradgetriebe beschrieben, das aus einer Zahnstange, Zahnstangenritzel, Wellen und Zahnräder mit Freilauf besteht, wobei an zwei parallel angeordneten Wellen zwei Triebstockritzel starr befestigt sind und zwischen den Triebstockritzel ein als Zahnstange mit Verzahnungen auf den gegenüberliegenden Seiten ausgebildeter Triebstock angeordnet ist und auf den Wellen ebenfalls zwei Übersetzungsritzel mit gegenläufigen Freiläufen sitzen. Zwischen den beiden Übersetzungsritzeln ist ein Zwischenrad mit einer an dem Zwischenrad befestigten Abtriebswelle angeordnet. Dieses Zahnstangen- Zahnradgetriebe kann für die Umwandlung von linearen Bewegungen, die durch Wellen erzeugt werden, in Rotationsbewegungen zum Antrieb eines Generators eingesetzt werden.
Weiterhin wird in der eigenen Patentanmeldung 10 2014 015 801.2 ein Sauganker als Gründung für eine Elektro- Boje beschrieben, der aus einem zylindrischen Hohlkörper, der an der dem Meeresgrund zugewandten Unterseite offen und an der Oberseite (4) mit einem Deckel verschlossen ist besteht, wobei der Deckel ein oder mehrere Öffnungen aufweist, wobei an dem zylindrischen Hohlkörper entkoppelbar eine Versorgungseinheit angeordnet ist, mit deren Hilfe der Sauganker in den Meeresboden als Gründung für Offshore- Anlagen eingebracht wird. Die Versorgungseinheit besteht aus einem Gestell und einer am Gestell befestigten Saugpumpe, die über ein oder mehrere Abreißkupplungen mit ein oder mehreren, selbsttätig verschließbaren Ventilen im Deckel des zylindrischen Hohlkörpers verbunden ist, wobei die selbsttätig verschließbaren Ventile an den Öffnungen im Deckel angeordnet sind.

Die im Stand der Technik veröffentlichten Lösungen zur Umwandlung der Energie von Meereswellen in elektrische Energie sind entweder unzureichend offenbart oder sie sind in ihrer Konstruktion und Bau sehr aufwendig und damit sehr Störanfällig und können auf Grund ihrer Schwerfälligkeit, die Wellenenergie nur unzureichend ausnutzen.

Aufgabe der Erfindung ist es, eine Vorrichtung zu schaffen, die eine einfache und robuste Konstruktion aufweist, die im rauen Offshore- Bereich keine Störanfälligkeiten aufweist und einen hohen Ausnutzungsgrad der Wellenenergie besitzt.

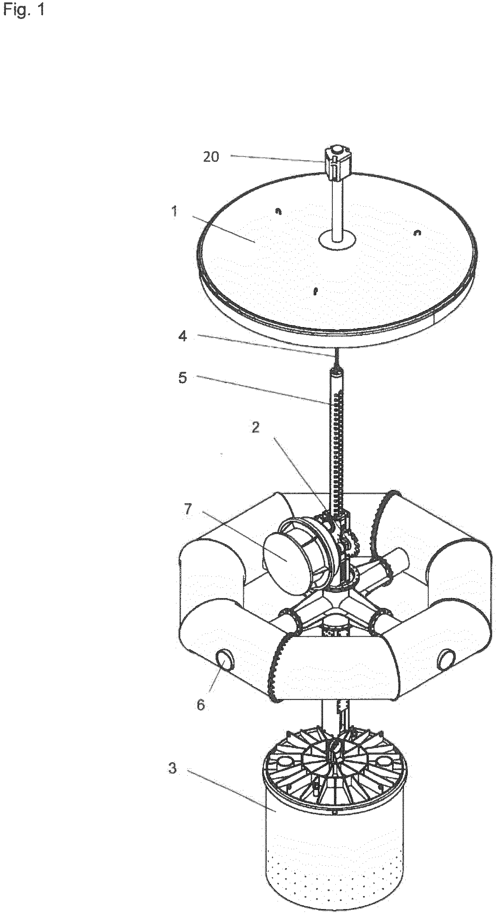

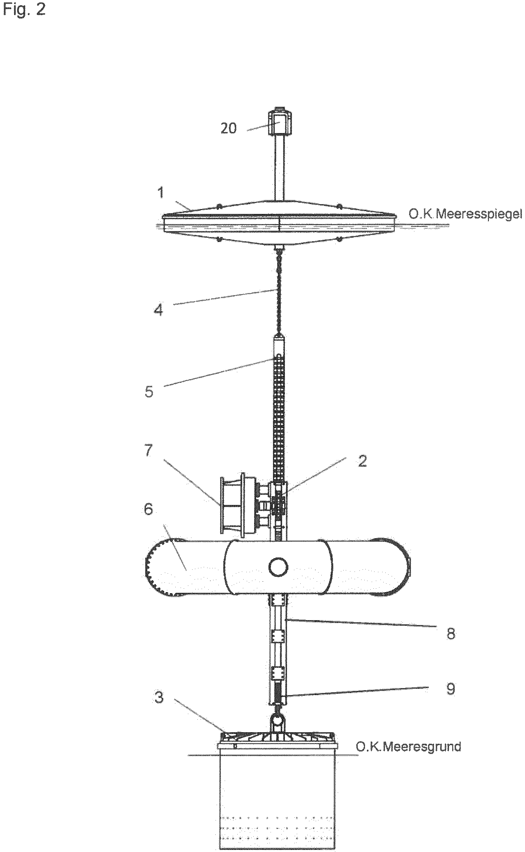

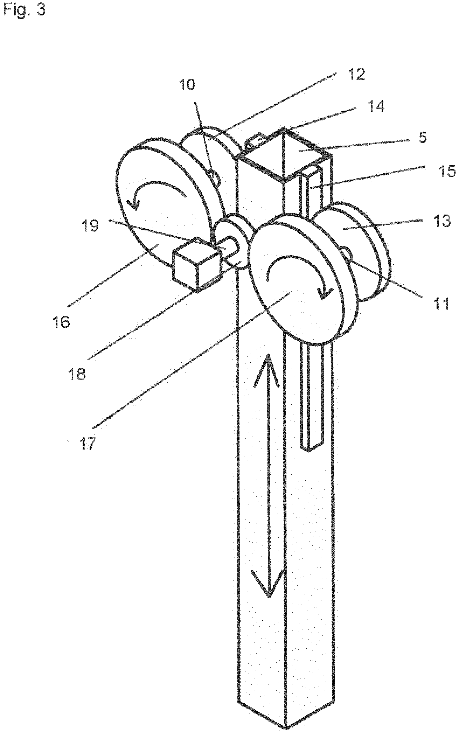

Erfindungsgemäß besteht die Vorrichtung zur Umwandlung von Wellenenergie in Elektroenergie aus einer Kombination eines auf der Wasseroberfläche angeordneten Schwimmkörpers (1) mit einem Zahnstangen- Zahnradgetriebe (2), einem Auftriebs- und Stabilisierungskörper (6) und einer im Meeresgrund angeordneten Gründung (3), wobei der Schwimmkörper (1) über eine Zugkette (4) an einen als Zahnstange ausgebildeten Triebstock (5) eines Zahnstangen- Zahnradgetriebes (2) befestigt ist , der Triebstock (5) in ein mit einem Generator (7) verbundenes Zahnstangen-Zahnradgetriebe (2) eingreift, das Zahnstangen- Zahnradgetriebe (2) mit einem Auftriebs- und Stabilisierungskörper (6) verbunden und der Auftriebs- und Stabilisierungskörper (6) mittels Führungsschienen (8) und über einen Puffer (9) federnd an einer Gründung (3) befestigt ist.
In einer Ausgestaltung der Erfindung ist der Schwimmkörper (1) als ein Bojenkörper und der Auftriebs- und Stabilisierungskörper (6) als ringförmiger Hohlkörper ausgebildet, wobei im Zentrum des ringförmigen Hohlkörpers das Zahnstangen-Zahnradgetriebe (2) angeordnet ist.
In einer weiteren Ausgestaltung der Erfindung besteht das Zahnstangen-Zahngetriebe (2) aus an zwei parallel angeordneten Wellen (10,11) zwei starr befestigt Triebstockritzel (12,13), wobei zwischen den Triebstockritzel(12,13) der als Zahnstange mit Verzahnungen (14,15) auf den gegenüberliegenden Seiten ausgebildeter Triebstock (5) angeordnet ist und auf den Wellen (10,11) ebenfalls zwei Übersetzungsritzel (16,17) mit gegenläufigen Freiläufen sitzen und zwischen den beiden Übersetzungsritzel (16,17) ein Zwischenrad (18) mit einer an dem Zwischenrad (18) befestigten Antriebswelle (19) mit einem Schwungrad angeordnet ist.
In einer weiteren Ausgestaltung der Erfindung ist die Gründung (3) als Sauganker gemäß eigener Anmeldung 10 2014 015 801,2 ausgebildet.
Die Erfindung wird nun an Hand eines Beispiels näher erläutert, wobei die Fig. 1 eine schematische ISO- Ansicht der Vorrichtung, die Fig. 2 eine Seitenansicht der Vorrichtung, und die Fig. 3 eine schematische Darstellung des Zahnstangen-Zahnradgetriebes (2) mit
- 1: Schwimmkörper
- 2: Zahnstangen-Zahnradgetriebe
- 3: Gründung
- 4: Zugkette
- 5: Triebstock
- 6: Auftriebs- und Stabilisierungskörper
- 7: Generator
- 8: Führungsschiene
- 9: Puffer
- 10: Welle
- 11: Welle
- 12: Treibstockritzel
- 13: Triebstockritzel
- 14: Verzahnung
- 15: Verzahnung
- 16: Übersetzungsritzel mit Freilauf
- 17: Übersetzungsritzel mit Freilauf
- 18: Zwischenrad
- 19: Antriebswelle
- 20: Signaleinrichtung
zeigen.

Ein als Bojenkörper ausgebildeter Schwimmkörper (1) ist mittels einer Zugkette (4) an dem Triebstock (5) mit den Verzahnungen (14,15) des Zahnstangen-Zahnradgetriebes (2) befestigt. Die Wellenbewegung verursacht am Schwimmkörper (1) eine auf- und abwärts gerichtete Bewegung, die mittels der Zugkette (4) auf den Triebstock (5) übertragen wird. Im Zahnstangen- Zahnradgetriebe (2) wird die lineare Bewegung des Triebstocks (5) in eine Rotationsbewegung umgewandelt, die dann den Generator (7) antreibt. Dazu besteht das Zahnstangen- Zahnradgetriebe (2) aus zwei parallel angeordneten Wellen (10,11) mit zwei daran starr befestigten Triebstockritzel (12,13). Zwischen den Triebstockritzel(12,13) ist der Triebstock (5) als eine Zahnstange mit Verzahnungen (14,15) auf den gegenüberliegenden Seiten angeordnet. Auf den Wellen (10,11) sitzen ebenfalls zwei Übersetzungsritzel (16,17) mit gegenläufigen Freiläufen, wobei zwischen den beiden Übersetzungsritzel (16,17) ein Zwischenzahnrad (18) mit einer an dem Zwischenzahnrad (18) befestigten Antriebswelle (19) angeordnet ist. Die Wellen (10,11) sind in nicht dargestellten Brücken parallel gelagert. Durch die lineare Bewegung des Triebstocks (5) nach oben und nach unten werden die Triebstockritzel (12,13) in eine Rotationsbewegung versetzt. Da auf den Wellen (10,11) ebenfalls die Übersetzungsritzel (16,17) mit ihren gegenläufigen Freiläufen angeordnet sind, werden diese ebenfalls in eine Rotationsbewegung versetzt, wobei durch die gegenläufigen Freiläufe bei der Bewegung des Triebstocks (5) nach oben das Übersetzungsritzel (16) in Rotation und bei der Bewegung des Triebstock (5) nach unten das Übersetzungsritzel (17) in Rotation versetzt wird. Durch die gegenläufigen Freiläufe in den Übersetzungsritzel (16,17) werden die Übersetzungsritzel (16,17) unabhängig von der linearen Bewegung des Triebstocks (5) nach oben oder nach unten immer in eine Rotation mit gleicher Drehrichtung versetzt. Eventuelle Schwankungen in den Drehzahlen werden durch ein nicht näher dargestelltes Schwungrad auf der Antriebswelle(19) ausgeglichen.
Das Zahnstangen- Zahnradgetriebe (2) ist im Zentrum eines als ein ringförmiger Hohlkörper ausgebildeten Auftriebs- und Stabilisierungskörpers (6) angeordnet, der wiederum mittels Führungsschienen (8) über einen Puffer (9), der aus einer Feder besteht, an einer Gründung (3) beweglich befestigt ist. Diese Gründung (3) ist als Sauganker gemäß der eigenen Anmeldung 10 2014 015 801.2 ausgebildet. Oberhalb des Schwimmkörpers (1) ist über eine geeignete Einrichtung eine Signaleinrichtung (20) angeordnet.
Durch den Auftriebs- und Stabilisierungskörper (6) mit seiner Verbindung über Führungsschienen (8) und Puffer (9) wird eine gerade Ausrichtung der gesamten Vorrichtung vom Schwimmkörper (1) zur Gründung (3) und so eine optimale Ausnutzung der Wellenenergie erreicht.

## Patentansprüche

1. Vorrichtung zur Umwandlung von Wellenenergie in Elektroenergie bestehend aus eines auf der Wasseroberfläche angeordneten Schwimmkörpers (1) mit einem Zahnstangen- Zahnradgetriebe (2), einem Auftriebs- und Stabilisierungskörper (3) und einer im Meeresgrund angeordneten Gründung (3), **dadurch gekennzeichnet, dass** der Schwimmkörper (1) über eine Zugkette (4) an einen als Zahnstange ausgebildeten Triebstock (5) befestigt ist , der Triebstock (5) in ein mit einem Generator (7) verbundenes Zahnstangen-Zahnradgetriebe (2) eingreift, das Zahnstangen- Zahnradgetriebe (2) mit einem Auftriebs- und Stabilisierungskörper (6) verbunden und der Auftriebs- und Stabilisierungskörper (6) mittels Führungsschienen (8) und über einen Puffer (9) federnd an einer Gründung (3) befestigt ist.

2. Vorrichtung nach Anspruch 1, **dadurch gekennzeichnet, dass** das Zahnstangen- Zahnradgetriebe (2) im Zentrum des Auftriebs- und Stabilisierungskörpers (6) angeordnet ist

3. Vorrichtung nach Anspruch 1- 2, **dadurch gekennzeichnet, dass** der Auftriebs- und Stabilisierungskörper (6) als ein ringförmiger Hohlkörper ausgebildet ist.

4. Vorrichtung nach Anspruch 1- 3, **dadurch gekennzeichnet, dass** der Puffer (9) als eine Feder ausgebildet ist.

5. Vorrichtung nach Anspruch 1 - 4, **dadurch gekennzeichnet, dass** der Schwimmkörper (1) als ein Bojenkörper ausgebildet ist.

6. Vorrichtung nach Anspruch 1- 5, **dadurch gekennzeichnet, dass** das Zahnstangen-Zahngetriebe (2) aus an zwei parallel angeordneten Wellen (10,11) zwei starr befestigt Triebstockritzel (12,13) besteht, wobei zwischen den Triebstockritzel(12,13) ein als Zahnstange mit Verzahnungen (14,15) auf den gegenüberliegenden Seiten ausgebildeter Triebstock (5) angeordnet ist und auf den Wellen (10,11) ebenfalls zwei Übersetzungsritzel (16,17) mit gegenläufigen Freiläufen sitzen und zwischen den beiden Übersetzungsritzel (16,17) ein Zwischenrad (18) mit einer an dem Zwischenrad (18) befestigten Antriebswelle (19) mit einem nicht dargestellten Schwungrad angeordnet ist.

7. Vorrichtung nach Anspruch 1-6 **dadurch gekennzeichnet, dass** die Gründung (3) als Sauganker, ausgebildet ist.

## Geänderte Patentansprüche

### Geänderte Ansprüche nach Art. 19.1 PCT

**1.** Vorrichtung zur Umwandlung von Wellenenergie in Elektroenergie bestehend aus eines auf der Wasseroberfläche angeordneten Schwimmkörpers (1), einem Zahnstangen- Zahnradgetriebe (2), einem Auftriebs- und Stabilisierungskörper (3) und einer im Meeresgrund angeordneten Gründung (3), **dadurch gekennzeichnet, dass** der Schwimmkörper (1) über eine Zugkette (4) an einen als Zahnstange ausgebildeten Triebstock (5) befestigt ist , der Triebstock (5) in ein mit einem Generator (7) verbundenes Zahnstangen-Zahnradgetriebe (2) eingreift , das Zahnstangen- Zahnradgetriebe (2) mit einem Auftriebs- und Stabilisierungskörper (6) verbunden, wobei das Zahnstangen- Zahnradgetriebe im Zentrum des Auftriebs- und Stabilisierungskörpers angeordnet und der Auftriebs- und Stabilisierungskörper (6) mittels Führungsschienen (8) und über einen Puffer (9) federnd an einer Gründung (3) befestigt ist

**2.** Vorrichtung nach Anspruch 1- 2, **dadurch gekennzeichnet, dass** der Auftriebs- und Stabilisierungskörper (6) als ein ringförmiger Hohlkörper ausgebildet ist.

**3.** Vorrichtung nach Anspruch 1- 3, **dadurch gekennzeichnet, dass** der Puffer (9) als eine Feder ausgebildet ist.

**4.** Vorrichtung nach Anspruch 1 - 4, **dadurch gekennzeichnet, dass** der Schwimmkörper (1) als ein Bojenkörper ausgebildet ist.

**5.** Vorrichtung nach Anspruch 1- 5, **dadurch gekennzeichnet, dass** das Zahnstangen-Zahngetriebe (2) aus an zwei parallel angeordneten Wellen (10,11) zwei starr befestigt Triebstockritzel (12,13) besteht, wobei zwischen den Triebstockritzel(12, 13) ein als Zahnstange mit Verzahnungen (14,15) auf den gegenüberliegenden Seiten ausgebildeter Triebstock (5) angeordnet ist und auf den Wellen (10, 11) ebenfalls zwei Übersetzungsritzel (16,17) mit gegenläufigen Freiläufen sitzen und zwischen den beiden Übersetzungsritzel (16,17) ein Zwischenrad (18) mit einer an dem Zwischenrad (18) befestigten Antriebswelle (19) mit einem nicht dargestellten Schwungrad anbeordnet ist.

**6.** Vorrichtung nach Anspruch 1-6 **dadurch gekennzeichnet, dass** die Gründung (3) als Sauganker, ausgebildet ist.
